(19) Europäisches Patentamt
European Patent Office
Office européen des brevets

(11) **EP 3 100 011 B1**

(12) **EUROPÄISCHE PATENTSCHRIFT**

(45) Veröffentlichungstag und Bekanntmachung des Hinweises auf die Patenterteilung:
**29.07.2020 Patentblatt 2020/31**

(21) Anmeldenummer: **14825334.7**

(22) Anmeldetag: **22.12.2014**

(51) Int Cl.:
*G01J 3/18* (2006.01)        *B23K 26/70* (2014.01)
*G01J 1/42* (2006.01)        *G01J 1/04* (2006.01)
*G02B 27/10* (2006.01)

(86) Internationale Anmeldenummer:
**PCT/EP2014/078943**

(87) Internationale Veröffentlichungsnummer:
**WO 2015/113713 (06.08.2015 Gazette 2015/31)**

(54) **STRAHLPROPAGATIONSKAMERA UND VERFAHREN ZUR LICHTSTRAHLANALYSE**

BEAM PROPAGATION CAMERA AND METHOD FOR LIGHT BEAM ANALYSIS

CAMÉRA À PROPAGATION DE FAISCEAUX ET PROCÉDÉ D'ANALYSE DE FAISCEAUX LUMINEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2014 DE 102014201779**

(43) Veröffentlichungstag der Anmeldung:
**07.12.2016 Patentblatt 2016/49**

(73) Patentinhaber: **Carl Zeiss SMT GmbH
73447 Oberkochen (DE)**

(72) Erfinder: **MANGER, Matthias
73432 Aalen-Unterkochen (DE)**

(74) Vertreter: **Frank, Hartmut
Bonsmann Bonsmann Frank
Patentanwälte
Reichspräsidentenstraße 21-25
45470 Mülheim a. d. Ruhr (DE)**

(56) Entgegenhaltungen:
**US-A1- 2006 268 669        US-A1- 2009 185 132
US-B2- 8 237 922**

# EP 3 100 011 B1

**Beschreibung**

Die vorliegende Anmeldung beansprucht die Priorität der Deutschen Patentanmeldung DE 10 2014 201 779.3, angemeldet am 31. Januar 2014.

HINTERGRUND DER ERFINDUNG

Gebiet der Erfindung

Die Erfindung betrifft eine Strahlpropagationskamera und ein Verfahren zur Lichtstrahlanalyse. Die Erfindung ist insbesondere als Strahlpropagationsmesssystem für Laserstrahlung einsetzbar, um einen Lichtstrahl (insbesondere einen Laserstrahl) in seinen Fokussiereigenschaften zu analysieren und um Aufschluss sowohl über die geometrischen Strahlparameter als auch über die Strahlqualität zu erlangen.

Die Erfindung ist insbesondere zur Analyse elektromagnetischer Strahlung geeignet, wie sie z.B. in Laserplasmaquellen (etwa bei einer EUV-Quelle einer mikrolithographischen Projektionsbelichtungsanlage) eingesetzt wird, jedoch nicht hierauf beschränkt. In weiteren Anwendungen ist die Strahlpropagationskamera gemäß der Erfindung auch allgemein dazu geeignet, elektromagnetische Strahlung, die zu beliebigen (insbesondere Mess-)Zwecken eingesetzt wird, zu analysieren.

Stand der Technik

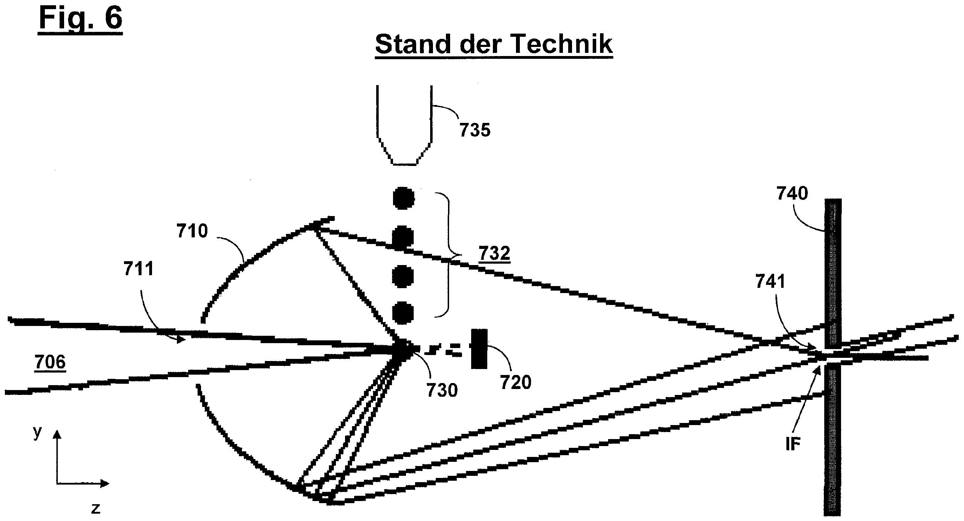

Laserplasmaquellen werden z.B. zur Anwendung in der Lithographie eingesetzt. So erfolgt etwa im Betrieb einer für den EUV-Bereich (z.B. bei Wellenlängen von z.B. etwa 13 nm oder etwa 7 nm) ausgelegten Projektionsbelichtungsanlage die Erzeugung des benötigten EUV-Lichtes mittels einer auf einer Plasma-Anregung basierenden EUV-Lichtquelle, zu der Fig. 6 einen beispielhaften herkömmlichen Aufbau zeigt.

Diese EUV-Lichtquelle weist zunächst einen (nicht gezeigten) Hochenergielaser z.B. zur Erzeugung von Infrarotstrahlung 706 (z.B. $CO_2$-Laser mit einer Wellenlänge von $\lambda \approx 10.6 \ \mu m$) auf, welche über eine Fokussieroptik fokussiert wird, durch eine in einem als Ellipsoid ausgebildeten Kollektorspiegel 710 vorhandene Öffnung 711 hindurchtritt und auf ein mittels einer Targetquelle 735 erzeugtes und einer Plasmazündungsposition 730 zugeführtes Targetmaterial 732 (z.B. Zinntröpfchen) gelenkt wird. Die Infrarotstrahlung 706 heizt das in der Plasmazündungsposition 730 befindliche Targetmaterial 732 derart auf, dass dieses in einen Plasmazustand übergeht und EUV-Strahlung abgibt. Diese EUV-Strahlung wird über den Kollektorspiegel 710 auf einen Zwischenfokus IF (= "Intermediate Focus") fokussiert und tritt durch diesen in eine nachfolgende Beleuchtungseinrichtung, deren Umrandung 740 lediglich angedeutet ist und die für den Lichteintritt eine freie Öffnung 741 aufweist, ein.

Von wesentlicher Bedeutung für die in einer EUV-Lichtquelle bzw. Laserplasmaquelle erzielbare Dosisstabilität bzw. zeitliche Stabilität der EUV-Abstrahlcharakteristik und die realisierbare EUV-Lichtausbeute ist dabei, dass die mit zunehmendem Lichtbedarf sehr schnell (z.B. mit einer Injektionsrate im Bereich von 100 kHz bzw. in einem zeitlichen Abstand von z.B. 10 $\mu$s) in die Laserplasmaquelle "einfliegenden" Zinntröpfchen individuell hochgenau (z.B. mit einer Genauigkeit unterhalb von 1$\mu$m) und reproduzierbar von dem das Tröpfchen zerstäubenden Laserstrahl getroffen werden. Dies erfordert im o.g. Aufbau wiederum eine hochgenaue Einstellung der Tröpfchenposition sowie eine hochgenaue Nachführung der z.B. vom $CO_2$-Laser erzeugten Infrarotstrahlung 706.

Sowohl die Bestimmung der Tröpfchenposition als auch die Bestimmung der Fokuslage der entsprechend nachzuführenden Laserstrahlen können mit einer sogenannten Strahlpropagationskamera erfolgen, wobei sowohl die Laserstrahlen in "Vorwärtsrichtung" (d.h. die Infrarotstrahlung 706 vor dem Auftreffen auf die jeweiligen Target-Tröpfchen) als auch die Laserstrahlen in "Rückwärtsrichtung" (d.h. die von dem jeweiligen Target-Tröpfchen zurückreflektierte Infrarotstrahlung 706) erfasst und die für die Laserstrahl- sowie Tröpfchenführung benötigten Messdaten gewonnen werden.

Hierbei tritt in der Praxis u.a. das Problem auf, dass die von den Target-Tröpfchen zurückreflektierte Infrarotstrahlung 706 vergleichsweise intensitätsschwach ist und eine exakte messtechnische Erfassung der Tröpfchenposition und damit auch die hochgenaue Nachführung der vom $CO_2$-Laser erzeugten Infrarotstrahlung 706 erschwert.

US 2009/0185132 A1 offenbart u.a. einen Wellenfrontsensor sowie ein Verfahren zur Wellenfrontmessung z.B. bei der Augenheilkunde und zur Messung der Oberflächen von Kontaktlinsen, wobei der Wellenfrontsensor ein diffraktives optisches Element zur Erzeugung von Bildern in wenigstens zwei Beugungsordnungen aufweist und wobei die mit einem Detektor aufgenommenen Bilddaten unter Verwendung eines Gerchberg-Saxton-Algorithmus zur Wellenfrontbestimmung analysiert werden.

US 2006/268669 A1 offenbart u.a. eine Vorrichtung zur Informationsaufzeichnung oder -wiedergabe auf einer bzw. von einer Optical Disc, wobei zur Wellenfrontaufspaltung ein diffraktives Element eingesetzt wird und wobei auf einer Photodetektoranordnung unterschiedliche Detektorbereiche mit voneinander verschiedenen Fokuspositionen vorliegen.

US 8 237 922 B2 offenbart u.a. eine Vorrichtung zur Analyse eines Laserstrahls, wobei in einem Fabry-Perot-Resonator ein Spiegelpaar in Lichtausbreitungsrichtung nach einer fokussierenden Linse eingesetzt wird und wobei eine Vielzahl von Laserspots auf eine Kamera zur Bereitstellung von Echtzeitdaten betreffend die Laserstrahleigenschaften gelenkt werden.

Zum weiteren Stand der Technik wird beispielhaft auf US 5,329,350 verwiesen.

ZUSAMMENFASSUNG DER ERFINDUNG

Aufgabe der vorliegenden Erfindung ist es, eine Strahlpropagationskamera und ein Verfahren zur Lichtstrahlanalyse bereitzustellen, welche auch unter vergleichsweise intensitätsschwachen Bedingungen eine möglichst exakte Analyse ermöglichen.

Diese Aufgabe wird durch die Strahlpropagationskamera gemäß den Merkmalen des unabhängigen Patentanspruchs 1 sowie das Verfahren gemäß den Merkmalen des nebengeordneten Patentanspruchs 10 gelöst.

Eine erfindungsgemäße Strahlpropagationskamera zur Vermessung der Fernfeldeigenschaften bzw. Fokussiereigenschaften sowie der Fokusposition eines Lichtstrahls weist auf:

- wenigstens eine strahlaufspaltende optische Anordnung, welche eine Strahlaufspaltung eines im Betrieb der Strahlpropagationskamera auf die strahlaufspaltende optische Anordnung entlang einer optischen Achse der Strahlpropagationskamera auftreffenden Strahls in sieben Teilstrahlen umfassend die -3te bis +3te Beugungsordnung bewirkt; und

- eine Sensoranordnung zur Erfassung dieser Teilstrahlen und zur Messung der von diesen Teilstrahlen auf der Sensoranordnung jeweils erzeugten Spotgrößen;

- wobei die strahlaufspaltende optische Anordnung eine diffraktive Struktur und ein refraktives optisches Element aufweist, wobei die diffraktive Struktur in Bezug auf die optische Achse dezentriert angeordnet ist;

- wobei die diffraktive Struktur derart ausgestaltet ist, dass wenigstens zwei der Teilstrahlen auf der Sensoranordnung räumlich voneinander getrennt sind und einen Fokusversatz in bezogen auf die optische Achse longitudinaler Richtung aufweisen; und

- wobei die diffraktive Struktur eine Brennweite $f_1$ aufweist, welche die Brennweite der ersten positiven Beugungsordnung bezeichnet, und das refraktive optische Element eine Brennweite $f_0$ aufweist, wobei das Verhältnis $f_1/f_0$ wenigstens 4 beträgt.

Unter einer Strahlpropagationskamera wird im Rahmen der vorliegenden Anmeldung eine Messanordnung zur Lichtstrahlanalyse verstanden, welche zur Vermessung der Fernfeldeigenschaften bzw. Fokussiereigenschaften sowie der Fokusposition eines Lichtstrahls (insbesondere eines Laserstrahls) dient, um Aufschluss sowohl über die geometrischen Strahlparameter als auch über die Strahlqualität zu erlangen. Dabei stellt die Größe des Fokus ein Maß für die Strahlqualität dar, und die Position des Fokus auf der Sensoranordnung bestimmt die geometrischen Eigenschaften des Strahls.

Unter der Aufspaltung eines Strahls in Teilstrahlen ist im Rahmen der vorliegenden Anmeldung zu verstehen, dass diese Teilstrahlen jeweils eine Kopie des ursprünglichen aufgespaltenen Strahls insofern darstellen, als die Teilstrahlen jeweils die gleichen geometrischen Parameter wie der ursprüngliche Strahl aufweisen, wobei lediglich die Intensität der Teilstrahlen gegenüber der Intensität des ursprünglichen Strahls infolge der Aufspaltung in mehrere Teilstrahlen entsprechend reduziert ist.

Bei der optischen Achse kann es sich insbesondere um eine Symmetrieachse des Systems bzw. der Strahlpropagationskamera handeln.

Unter dem Kriterium, dass wenigstens zwei der Teilstrahlen auf der Sensoranordnung räumlich voneinander getrennt sind, ist im Sinne der vorliegenden Anmeldung vorzugsweise zu verstehen, dass der Abstand zwischen den (intensitätsgewichteten) Schwerpunkten der betreffenden, auf der Sensoranordnung erzeugten Spots der Teilstrahlen wenigstens das 5-fache, insbesondere wenigstens das 10-fache, der Spotgröße im Sinne des zweiten (statistischen) Momentes beträgt. Im Falle von hart beschränkten Strahlen (z.B. Tophat-Strahlen) ist wie im Weiteren noch näher erläutert die Definiertheit des Momentes durch geeignete Apodisierung sicherzustellen.

Die Erfindung geht zunächst von dem Ansatz aus, eine Strahlaufspaltung eines Lichtstrahls (z.B. eines ausgekoppelten Probestrahls) einer zu analysierenden elektromagnetischen Strahlung, welche wiederum eine Erfassung der so erzeugten Teilstrahlen und deren Auswertung zur Analyse der Strahleigenschaften ermöglicht, dadurch zu erreichen, dass die Teilstrahlen sowohl einen longitudinalen Fokusversatz aufweisen als auch (zur Ermöglichung einer simultanen Aufzeichnung am Ort der Sensoranordnung) lateral versetzt sind. Von diesem Ansatz ausgehend liegt der Erfindung nun weiter das Konzept zugrunde, durch Verwendung einer diffraktiven Struktur die von einer solchen diffraktiven Struktur erzeugte Mehrzahl von Fokuslagen, die den unterschiedlichen Beugungsordnungen der diffraktiven Struktur entsprechen, zur Realisierung des longitudinalen Fokusversatzes zu erzielen. Mit anderen Worten macht sich die Erfindung die üblicherweise unerwünschte Eigenschaft einer diffraktiven Linse, entsprechend den unterschiedlichen Beugungsordnungen voneinander verschiedene Fokuslagen zu erzeugen, gezielt zunutze, um einen zur Strahlanalyse erforderlichen longitudinalen Fokusversatz zu realisieren.

Zugleich macht sich die Erfindung den weiteren Umstand zunutze, dass der über den vorstehend genannten longitudinalen Fokusversatz hinaus zur Ermöglichung einer simultanen Aufzeichnung am Ort der Sensoranordnung notwendige laterale Versatz der Teilstrahlen vergleichsweise einfach über einen "Symmetriebruch" erreichbar ist, welcher z.B. durch eine einfache Dezentrierung der diffraktiven Struktur (entweder durch Versetzung in einer zur optischen Achse senkrechten Ebene oder bereits durch entsprechendes Design der diffraktiven Struktur) erzielt werden kann.

Dabei wird erfindungsgemäß ein erhöhter Designaufwand bei der Ausgestaltung der strahlaufspaltenden optischen Anordnung in Kauf genommen, welcher durch das grundsätzlich nichttriviale Fokusverhalten einer diffraktiven Struktur und den Umstand, dass die den einzelnen Beugungsordnungen entsprechenden Teilstrahlen voneinander verschiedene Vergrößerungen ("magnifications") sowie auch einen unterschiedlichen "Afokalitätsmismatch" (dahingehend, dass die Verkettung von Fourierebenen und Feldebenen im optischen Strahlengang nur für die 0-te Beugungsordnung gegeben ist) aufweisen, bedingt ist.

Durch Inkaufnahme dieses Designaufwandes werden - wie im Weiteren noch detaillierter erläutert - im Gegenzug signifikante Vorteile erreicht, wobei insbesondere die bei dem erfindungsgemäßen Konzept erzielte große Freiheit bzw. Flexibilität in der Auslegung der Strahlpropagationskamera, die Möglichkeit der Realisierung auch in vergleichsweise lichtschwachen Anwendungen sowie die geringe optomechanische Komplexität der strahlaufspaltenden optischen Anordnung (welche keine besonderen Anforderungen an Halterung, Verstellmechanismen etc. stellt) zu nennen sind.

Im Ergebnis wird in der erfindungsgemäßen Strahlpropagationskamera ein z.B. aus einer zu analysierenden elektromagnetischen Strahlung ausgekoppelter Lichtstrahl in geeigneter Weise und unter Einsatz einer diffraktiven Struktur in eine Mehrzahl von Teilstrahlen bzw. Nutzstrahlen repliziert, wobei benachbarte Nutzstrahlen in Ausbreitungsrichtung in zur Ausbreitungsrichtung longitudinaler Richtung einen Fokusversatz und in zur optischen Achse (bzw. Lichtausbreitungsrichtung der auf die strahlaufspaltende Anordnung auftreffenden Strahlung) transversaler Richtung eine Separation derart aufweisen, dass die Amplituden der Teilstrahlen nicht nennenswert überlappen, so dass mit einer Sensoranordnung geeigneter Ausdehnung mehrere Strahlschnitte bzw. Messspots gleichzeitig aufgezeichnet werden können.

Gemäß einer Ausführungsform beträgt das Verhältnis $f_1/f_0$ wenigstens 10.

Gemäß einer Ausführungsform sind das refraktive optische Element und die diffraktive Struktur monolithisch ausgestaltet.

Gemäß einer Ausführungsform ist die refraktive Linse eine Plankonvexlinse.

Gemäß einer Ausführungsform ist die diffraktive Struktur als Phasen-DOE ausgestaltet.

Gemäß einer Ausführungsform kann die diffraktive Struktur auch als Transmissions-DOE ausgestaltet sein. Auf diese Weise kann bei lichtstarken Anwendungen auch eine gezielte Schwächung der Intensität herbeigeführt werden.

Gemäß einer Ausführungsform ist die diffraktive Struktur als Fresnel-Linse oder Fresnel'sche Zonenplatte ausgestaltet.

Gemäß einer Ausführungsform ist die diffraktive Struktur in Transmission betrieben.

Gemäß einer weiteren Ausführungsform ist die diffraktive Struktur in Reflexion betrieben.

Die Erfindung betrifft weiter auch ein Verfahren zur Lichtstrahlanalyse zur Vermessung der Fernfeldeigenschaften bzw. Fokussiereigenschaften sowie der Fokusposition eines Lichtstrahls, wobei das Verfahren folgende Schritte aufweist:

- Strahlaufspaltung eines sich entlang einer optischen Achse ausbreitenden Strahls in sieben Teilstrahlen umfassend die -3te bis +3te Beugungsordnung;

- Messung der von diesen Teilstrahlen auf einer Sensoranordnung jeweils erzeugten Spotgröße; und

- Berechnung wenigstens eines der Strahlparameter Divergenz ($\theta$), Fokuslage ($z_0$) und Taillengröße ($w_0$) aus den gemessenen Spotgrößen;

- wobei die Strahlaufspaltung unter Verwendung einer strahlaufspaltenden optischen Anordnung derart erfolgt, dass wenigstens zwei der Teilstrahlen auf der Sensoranordnung räumlich voneinander getrennt sind und einen Fokusversatz in bezogen auf die optische Achse longitudinaler Richtung aufweisen;

- wobei die strahlaufspaltende optische Anordnung eine diffraktive Struktur und ein refraktives optisches Element aufweist, wobei die diffraktive Struktur in Bezug auf die optische Achse dezentriert angeordnet ist; und

- wobei die diffraktive Struktur eine Brennweite $f_1$ aufweist, welche die Brennweite der ersten positiven Beugungsordnung bezeichnet, und das refraktive optische Element eine Brennweite $f_0$ aufweist, wobei das Verhältnis $f_1/f_0$ wenigstens 4 beträgt.

Das erfindungsgemäße Verfahren kann insbesondere unter Verwendung einer Strahlpropagationskamera durchgeführt werden, welche die vorstehend beschriebenen Merkmale aufweist.

Weitere Ausgestaltungen der Erfindung sind der Beschreibung sowie den Unteransprüchen zu entnehmen.

Die Erfindung wird nachstehend anhand von in den beigefügten Abbildungen dargestellten Ausführungsbeispielen näher erläutert.

KURZE BESCHREIBUNG DER ZEICHNUNGEN

Es zeigen:

Figur 1     eine schematische Darstellung zur Erläuterung eines sowohl zur Realisierung einer Tröpfchenpositionsbestimmung als auch zur Bestimmung der Fokuslage der entsprechend nachzuführenden Laserstrahlen in einer Laserplasmaquelle möglichen prinzipiellen Aufbaus;

Figur 2a-c     schematische Darstellungen zur Erläuterung des Aufbaus und der Wirkungsweise einer im Rahmen der vorliegenden Erfindung eingesetzten strahlaufspaltenden optischen Anordnung;

Figur 3     eine schematische Darstellung zur Erläuterung des Prinzips einer gemäß der vorliegenden Erfindung erfolgenden Strahlauffächerung;

Figur 4a-b     schematische Darstellungen zur Erläuterung eines beispielhaften (Mess-)Strahlenganges in einer erfindungsgemäßen Strahlpropagationskamera;

Figur 5a-d     Diagramme zur Erläuterung beispielhafter Ausgestaltungen einer in einer erfindungsgemäßen Strahlpropagationskamera vorhandenen diffraktiven Struktur; und

Figur 6     eine schematische Darstellung des Aufbaus einer EUV-Lichtquelle gemäß dem Stand der Technik.

DETAILLIERTE BESCHREIBUNG BEVORZUGTER AUSFÜHRUNGSFORMEN

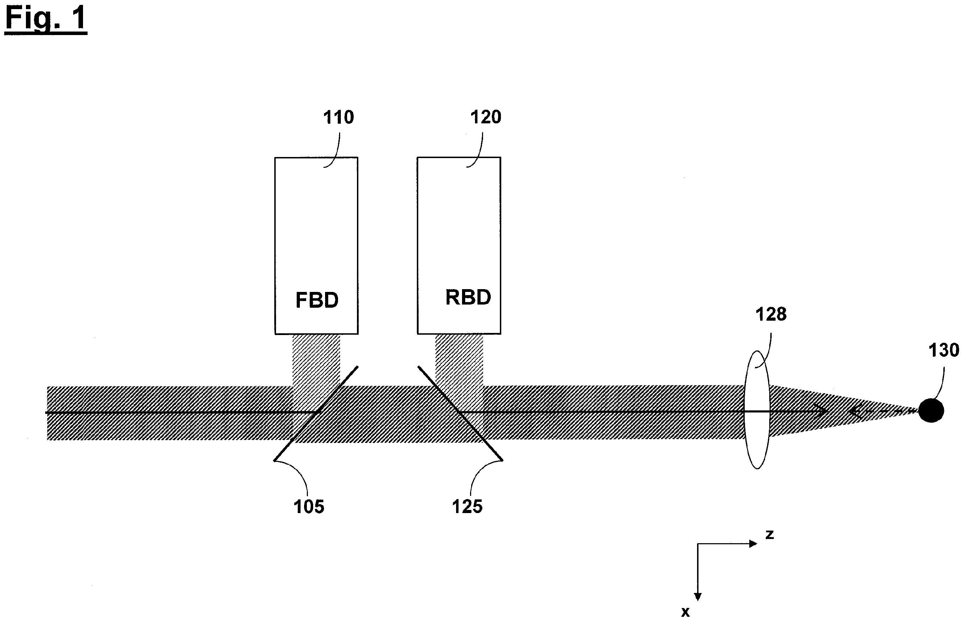

Fig. 1 zeigt eine schematische Darstellung eines in einer Laserplasmaquelle (wie z.B. derjenigen in Fig. 6) sowohl zur Bestimmung der Tröpfchenposition als auch der Fokuslage der entsprechend nachzuführenden Laserstrahlen möglichen prinzipiellen Aufbaus, wobei sowohl Laserstrahlen in "Vorwärtsrichtung" (vor dem Auftreffen auf das jeweilige Target-Tröpfchen) als auch Laserstrahlen in "Rückwärtsrichtung" (d.h. die von dem jeweiligen Target-Tröpfchen zurückreflektierte Infrarotstrahlung) ausgewertet werden.

Gemäß Fig. 1 wird ein Teil des einfallenden Laserstrahls mit Gauß'schem Profil an einem ersten teildurchlässigen Spiegel 105 ausgekoppelt und mit einer ersten Analyseeinheit 110 analysiert. Der den teildurchlässigen Spiegel 105 sowie einen weiteren teildurchlässigen Spiegel 125 durchlaufende Teil des einfallenden Laserstrahls gelangt über eine Fokussieroptik 128 zu einem metallischen Target- (z.B. Zinn-)Tröpfchen 130, wo ein Teil des Laserstrahls zurückreflektiert wird und über die Fokussieroptik 128 kollimiert zum teildurchlässigen Spiegel 125 zurückgelangt. An dem teildurchlässigen Spiegel 125 wird wiederum ein Teil des Laserstrahls zu einer zweiten Analyseeinheit 120 hin ausgekoppelt. Des Weiteren können (in Fig. 1 nicht eingezeichnete) Strahlfallen zum Auffangen des jeweils nicht genutzten Anteils der auf den teildurchlässigen Spiegel 105 bzw. 125 auftreffenden Strahlung vorgesehen sein.

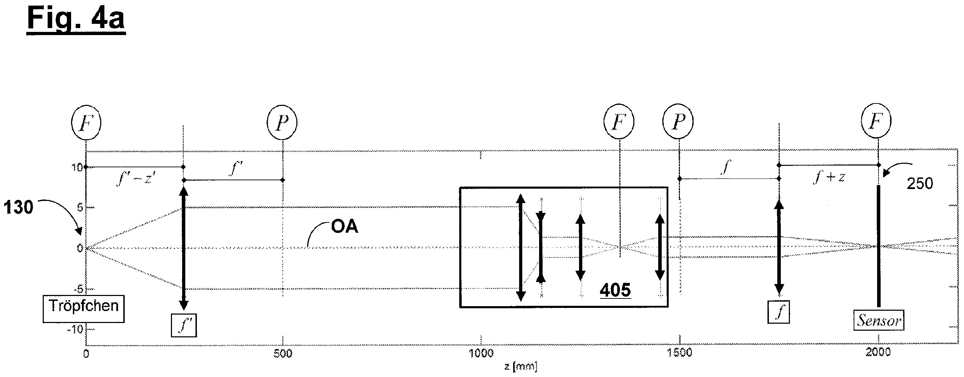

Ein schematischer Strahlengang zur Analyse des Laserstrahls in "Rückwärtsrichtung" ist in Fig. 4a dargestellt, wobei jeweils Feldebenen mit "F" und Pupillenebenen mit "P" bezeichnet sind. "130 bezeichnet in Fig. 4a das metallische Target-Tröpfchen, "405" ist eine afokale Teleskopgruppe, und "250" bezeichnet die Sensoranordnung. Eine Verschiebung der Position des Target-Tröpfchens 130 hat eine Änderung des auf der Sensoranordnung 250 erhaltenen Bildes zur Folge.

Die Analyse der Laserstrahlen sowohl in "Vorwärtsrichtung" (Laserstrahl vor dem Auftreffen auf das jeweilige Target-Tröpfchen 130, im Weiteren als "Vorwärtsstrahl" bezeichnet) als auch in "Rückwärtsrichtung" (Laserstrahl nach Reflexion dem jeweiligen Target-Tröpfchen 130, im Weiteren als "Rückwärtsstrahl" bezeichnet) erlaubt so eine Aussage über die relative Einstellung von Laserstrahl und Target-Tröpfchen 130 zueinander, wobei - unter erneuter Bezugnahme auf Fig. 1 - aus dem mit der ersten Analyseeinheit 110 erhaltenen Ergebnis auf die Einstellung bzw. Fokuslage des Laserstrahls und aus dem mit der zweiten Analyseeinheit 120 erhaltenen Ergebnis auf die Tröpfchenposition geschlossen werden kann.

Grundsätzlich sind für das Strahlgrößenmaß wie auch für das Divergenzmaß fallabhängig verschiedene Konventionen möglich und üblich. Auf dem Gebiet der Lasertechnik dienen beispielsweise häufig die Momente

$$w_x^2(z) = \frac{\int\limits_{-\infty}^{+\infty} dx\, dy\, I(x,y;z)\,(x - \bar{x}(z))^2}{\int\limits_{-\infty}^{+\infty} dx\, dy\, I(x,y;z)} \quad , \quad w_y^2(z) = \frac{\int\limits_{-\infty}^{+\infty} dx\, dy\, I(x,y;z)\,(y - \bar{y}(z))^2}{\int\limits_{-\infty}^{+\infty} dx\, dy\, I(x,y;z)} \tag{1}$$

mit

$$\bar{x}(z) = \frac{\int\limits_{-\infty}^{+\infty} dx\, dy\, I(x,y;z)\,x}{\int\limits_{-\infty}^{+\infty} dx\, dy\, I(x,y;z)} \quad , \quad \bar{y}(z) = \frac{\int\limits_{-\infty}^{+\infty} dx\, dy\, I(x,y;z)\,y}{\int\limits_{-\infty}^{+\infty} dx\, dy\, I(x,y;z)} \tag{2}$$

als Grundlage einer Strahlgrößendefinition entsprechend

$$w(z) = \sqrt{w_x^2(z) + w_y^2(z)} \tag{3}$$

oder

$$w(z) = \sqrt[4]{w_x^2(z)\,w_y^2(z)} \tag{4}$$

Hierin bezeichnet $I(x, y; z)$ die Lichtintensität für die gewählte Schnittebene.

Legt man bei einem Gaußstrahl einen Durchmesser von $5*\sigma$ zugrunde (wobei $\sigma$ im Einklang mit der üblichen Terminologie die Standardabweichung bzw. Breite der Normalverteilung bezeichnet und sich aus dem zweiten Moment ergibt), besitzt vorzugsweise der Abstand der betreffenden Spots auf der Sensoranordnung einen Wert von wenigstens $5*\sigma$.

Bei der Analyse des Vorwärtsstrahls sowie des Rückwärtsstrahls in dem prinzipiellen Aufbau von Fig. 1 ist zu beachten, dass nur der Vorwärtsstrahl idealisiert als "Gaußstrahl" anzusehen ist, für welchen im Bereich des bildseitigen Fokus für die Strahlgröße $w$ als Funktion der Ausbreitungskoordinate z in guter Näherung

$$w(z) = \sqrt{w_0^2 + \theta^2 (z - z_0)^2} \tag{5}$$

gilt, wobei $w_0$ die Taillengröße, $\theta$ die Divergenz und $z_0$ die Taillenlage (Fokuslage) bezeichnen.

Im Weiteren wird zunächst auf Probleme eingegangen, welche sich etwa im Falle der Analyse des Rückwärtsstrahls in der zweiten Analyseeinheit 120 daraus ergeben, dass der zu untersuchende Strahl kein idealer Gaußstrahl ist, sondern ein vergleichsweise scharf begrenzter Strahl (im Weiteren auch als "Tophat-Strahl" bezeichnet). Im Falle eines solchen scharf begrenzten Strahls ergibt sich im Fokus (Fernfeld) sowie im aberrationsfreien Idealfall die Airy'sche Lichtverteilung

$$I\left(r=\sqrt{x^2+y^2},z=z_0\right)=\pi P\left(\frac{1}{L_c}\right)^2\left[\frac{2J_1\left(2\pi\frac{r}{L_c}\right)}{2\pi\frac{r}{L_c}}\right]^2 \qquad (6)$$

wobei $L_c=\dfrac{\lambda}{NA}$ die charakteristische Länge, $P$ die gesamte durch das System transmittierte Leistung und $J_1(x)$ die

$$I(r,z=z_0)\propto\frac{1}{r^2}$$

Bessel-Funktion erster Ordnung bezeichnen. Aufgrund des asymptotischen Abfalls $I(r,z=z_0)\propto\frac{1}{r^2}$ in dieser Lichtverteilung sind jedoch die Momente entsprechend Gleichung (5) nicht definiert. Das hieraus resultierende Problem einer Auswertung auch des "hart begrenzten" Rückwärtsstrahls kann durch eine geeignete "künstliche" Apodisierung überwunden werden: Dies kann in einer ersten Ausführungsform dadurch erfolgen, dass in der Ebene der Sensoranordnung eine geeignete Maske "elektronisch" realisiert wird, welche entsprechend der Ersetzung

$$I(x,y;z)\rightarrow I(x,y;z)A(x-\bar{x},y-\bar{y}) \qquad (7)$$

die Intensitätsverläufe mit einer geeignet gewählten Apodisationsfunktion apodisiert (wobei diese Apodisierung insofern als "weich" bezeichnet werden kann, als Unstetigkeiten erst in den höheren Ableitungen des Apodisationsverlaufs auftreten). Hierzu geeignet ist beispielsweise die erst ab den zweiten Ableitungen unstetige Funktion

$$A_R(x,y)=\frac{1}{2}\left(1+\cos\left(\pi\frac{\sqrt{x^2+y^2}}{R}\right)\right) \qquad (8)$$

mit dem Beschneidungsradius $R$ im Bereich $5L_c < R < 10L_c$.

In einer zweiten Ausführungsform kann eine (im vorstehenden Sinne "weiche") Apodisation

$$u(x,y;z_{NF})\theta(x^2+y^2\leq R_{NA})\rightarrow u(x,y;z_{NF})A_{R_{NA}}(x,y) \qquad (9)$$

durch Einbringen eines strukturierten Graufilters mit entsprechendem Profil in das Nahfeld bzw. in eine Pupillenebene realisiert werden. Hierbei bezeichnen $u(x,y;z)$ die Strahlamplitude (welche über $I(x,y;z)=|u(x,y;z)|^2$ die Intensität bestimmt) und $R_{NA}$ den (die Öffnung bzw. numerische Apertur $NA$ definierenden) Aperturradius.

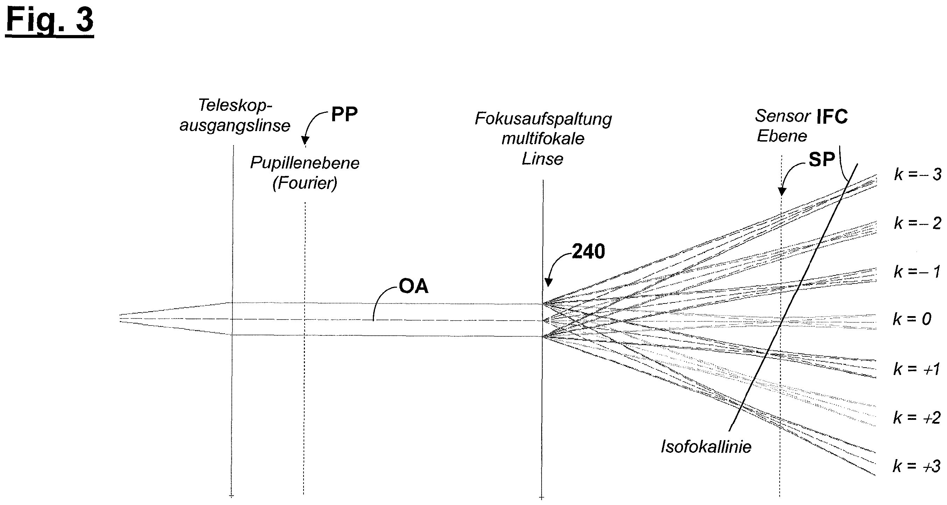

Fig. 3 zeigt eine schematische Darstellung zur Erläuterung des Prinzips der gemäß der Erfindung erfolgenden Strahlauffächerung.

Hierbei wird ein Lichtstrahl (z.B. aus einer zu analysierenden elektromagnetischen Strahlung ausgekoppelter Probestrahl) in verschiedene Teilstrahlen bzw. Nutzstrahlen aufgespalten bzw. repliziert, wobei für diese Nutzstrahlen zum einen ein longitudinaler Fokusversatz in Ausbreitungsrichtung und zum anderen (zur Ermöglichung einer simultanen Auswertung auf einer Sensoranordnung) auch eine transversale Aufsplittung erzielt wird. Wie aus der in Fig. 3 skizzierten Isofokallinie (mit IFC bezeichnet) ersichtlich ist, ist der Fokus für jeden der einzelnen Teilstrahlen verschieden. Die im Strahlengang platzierte Sensoranordnung 250 ergibt unterschiedliche Spot-Bilder, wobei die Größe in der Mitte bzw. im perfekten Fokus am kleinsten ist und zum Rand hin zunimmt. Eine Analyse des mit der Sensoranordnung aufgenommen Bildes, bei welcher die Größe des Spotbildes als Funktion des Index (z.B. von -3 bis 3) ermittelt wird, ermöglicht somit die Bestimmung der Fokuslage.

Zur Realisierung sowohl des longitudinalen Fokusversatzes als auch der transversale Aufsplittung der Teilstrahlen dient eine im Weiteren näher erläuterte strahlaufspaltende optische Anordnung 240.

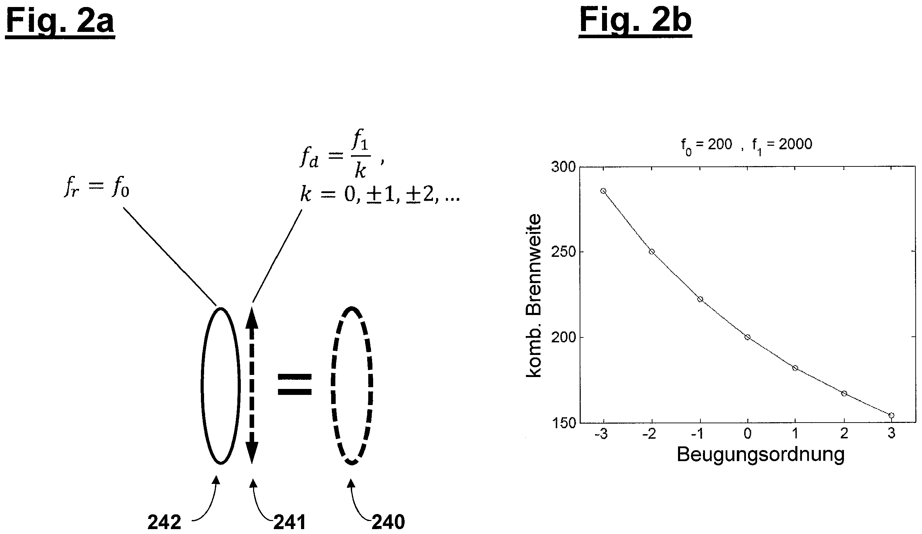

Die strahlaufspaltende optische Anordnung 240 weist im Ausführungsbeispiel eine diffraktive Struktur 241 sowie ein refraktives optisches Element (refraktive Linse) 242 auf, welche hier monolithisch ausgebildet sind und gemeinsam ein multifokales optisches Element bilden, wie in Fig. 2a schematisch angedeutet ist.

In einem konkreten Ausführungsbeispiel kann es sich bei dem refraktiven optischen Element 242 um eine Plankonvexlinse handeln, wobei die diffraktive Struktur 241 auf der planen Fläche dieser Plankonvexlinse ausgebildet sein kann. In einer weiteren Ausführungsform kann das refraktive optische Element 242 (z.B. Plankonvexlinse) auch über einen indexangepassten Lack mit einem separaten diffraktiven optischen Element (DOE) aneinandergefügt sein. Durch diese Ausgestaltungen wird jeweils ein Element von geringer optomechanischer Komplexität (hinsichtlich Halterung, Verstellmechanismen etc.) realisiert, mit dem die erfindungsgemäße Strahlaufspaltung erzielt werden kann.

Die Erfindung ist jedoch nicht auf die Integrierung von diffraktiver Struktur und refraktivem optischen Element oder insbesondere die beschriebene monolithische Ausgestaltung beschränkt. Somit können in weiteren Ausführungsformen diffraktive Struktur und refraktives optisches Element bzw. Linse auch separat und mit (vorzugsweise geringem) Abstand voneinander ausgestaltet sein.

Eine Sensoranordnung 250 befindet sich in der Pupillenebene (Fourierebene) des optischen Strahlengangs, und die Brennebene des refraktiven optischen Elementes 242 befindet sich ebenfalls in einer Pupillenebene (Fourierebene) des Strahlengangs.

Grundsätzlich besitzt eine diffraktive Linse entsprechend den auftretenden Beugungsordnungen positive wie negative Brennweiten entsprechend

$$f_{diff} = \frac{f_1}{k} \quad , \quad k = 0, \pm 1, \pm 2, \ldots \qquad (10)$$

Darin bezeichnet $f_1$ die Brennweite der ersten positiven Beugungsordnung und $k$ den Strahlindex bzw. die Beugungsordnung. Die Intensität des jeweiligen Fokus hängt dabei unmittelbar von der Ausführungs- und Approximationsform des zugrundeliegenden (näherungsweise parabolischen Phasenprofils) ab. In Kombination mit einer refraktiven Linse der Brennweite $f_0$ ergibt sich ein multifokales optisches System mit mehreren Nutzbrennweiten $f_k$, $k = 0, \pm 1, \ldots, k_{max}$, wobei bei Vernachlässigung des Abstandes zwischen der diffraktiven Struktur und der refraktiven Linse näherungsweise gilt

$$f_k \approx \frac{f_0 f_1}{f_1 + k f_0} \qquad (11)$$

Dieser Zusammenhang ist in Fig. 2b für $f_1 \gg f_0$ veranschaulicht.

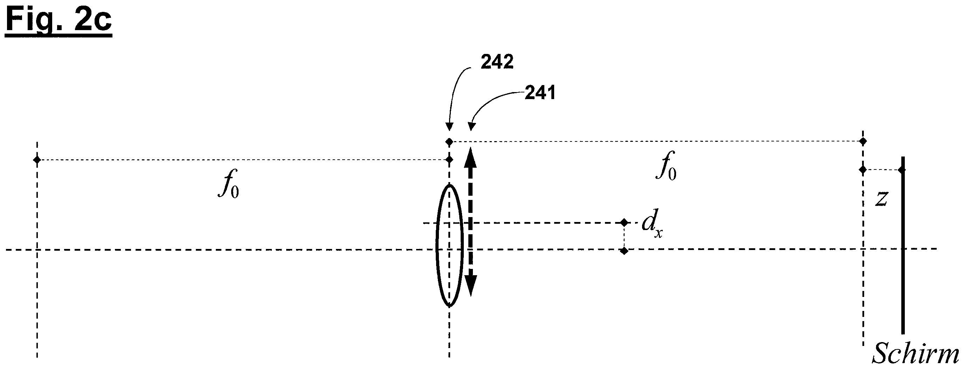

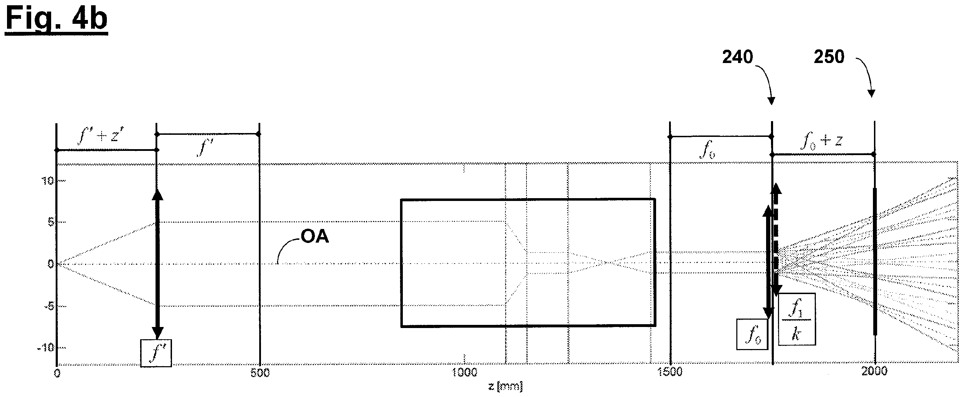

Wie in Fig. 4b angedeutet ergibt sich eine laterale Aufspaltung infolge eines gezielt eingeführten Symmetriebruches bzw. einer Dezentrierung der strahlaufspaltenden optischen Anordnung 240. Diese Dezentrierung ist in Fig. 2c schematisch dargestellt und wird im Ausführungsbeispiel dadurch erreicht, dass das refraktive optische Element 242 symmetrisch zur optischen Achse OA angeordnet ist und die diffraktive Linse 241 um eine Strecke $d_x$ dezentriert bzw. senkrecht zur optischen Achse OA verschoben angeordnet ist.

Im Weiteren wird die Auswertung der gemessenen Strahlgrößen zur Ermittlung der gesuchten Strahlparameter (Divergenz $\theta$, Fokuslage $z_0$ und Taillengröße $w_0$) erläutert. Wenngleich hierbei sowohl der durch die erfindungsgemäße diffraktive Struktur erzielte longitudinale Fokusversatz als der durch den Symmetriebruch herbeigeführte laterale Versatz der Teilstrahlen zu berücksichtigen sind, werden diese im Folgenden zunächst - lediglich zu Zwecken der besseren Verständlichkeit - außer Acht gelassen, d.h. es wird zunächst eine Auswertung im Falle einer herkömmlichen Strahlanalyse ohne den erfindungsgemäßen longitudinalen Fokusversatz sowie ohne den lateralen Versatz der Teilstrahlen beschrieben.

Bei einer Auswertung einer herkömmlichen Strahlanalyse ohne den erfindungsgemäßen longitudinalen Fokusversatz sowie ohne den lateralen Versatz der Teilstrahlen können die gemessenen Strahlgrößen $w(z)$ zunächst quadriert werden, woraufhin die Strahldaten im Fokus über eine Anpassung anhand der Gleichung

$$w^2(z) = A + B z + C z^2 \qquad (12)$$

(d.h. ein eine Parabel beschreibendes Polynom 2. Ordnung) ermittelt werden können, indem die Parameter bzw. "Anpasskoeffizienten" A, B und C gemäß Gleichung (12) bestimmt werden. Nach Gleichung (5) besteht zwischen den Anpasskoeffizienten und den Strahlparametern der Zusammenhang

$$A = w_0^2 + \theta^2 z_0^2 \quad , \quad B = -2\theta^2 z_0 \quad , \quad C = \theta^2 \qquad (13)$$

Damit ergeben sich die gesuchten Strahlparameter (Divergenz $\theta$, Fokuslage $z_0$ und Taillengröße $w_0$) aus den

8

Anpasskoeffizienten einfach gemäß

$$\theta = \sqrt{C} \quad , \quad z_0 = -\frac{B}{2C} \quad , \quad w_0 = \sqrt{A - \frac{B^2}{4C}} \qquad (14)$$

Nach den Regeln der Fourier-Abbildung sind Taillengröße $w_0$ und Divergenz $\theta$ gekoppelt über die Relation

$$w_0 \theta = c \qquad (15)$$

wobei $c$ für eine Konstante steht, die von den Strahleigenschaften und von den gewählten Konventionen für das Strahlgrößen- und das Divergenzmaß abhängt. Für einen idealen Gauß'schen Grundmode und den momentenbasierten Strahlmaßen gilt

$$c = \frac{\lambda}{\pi} \qquad (16)$$

wobei $\lambda$ die Lichtwellenlänge bezeichnet. Für einen aberrierten Gaußstrahl gilt hingegen die modifizierte Form

$$c = M^2 \frac{\lambda}{\pi} \qquad (17)$$

mit dem propagationsinvarianten Strahlparameterprodukt $M^2 \geq 1$ als fundamentalem Gütemaß. Durch Vergleich der Größe $w_0 \theta$ aus Gleichung (15) mit der Größe $\frac{\lambda}{\pi}$ aus Gleichung (16) kann somit festgestellt werden, wie nah der analysierte Strahl einem idealen Gaußstrahl entspricht oder ob es sich z.B. um einen vergleichsweise stark aberrierten Strahl handelt.

Nach der vorstehenden, lediglich zur Einführung und zur besseren Verständlichkeit erfolgten Erläuterung der Auswertung bei herkömmlicher Strahlanalyse wird im Folgenden beschrieben, wie diese Auswertung für die erfindungsgemäße Strahlanalyse, d.h. insbesondere unter Berücksichtigung des longitudinalen Fokusversatzes sowie des durch Symmetriebruch erzielten lateralen Versatzes der Teilstrahlen vorgenommen werden kann.

Die Wirkung des Symmetriebruchs kann im paraxialen Strahltransfermatrix-Formalismus beschrieben werden, indem zu homogenen Koordinaten bei der Strahlbeschreibung entsprechend

$$\underline{ray} = \begin{pmatrix} x \\ u \\ 1 \end{pmatrix} \quad , \qquad \underline{ray'} = \begin{pmatrix} x' \\ u' \\ 1 \end{pmatrix} \qquad (18)$$

übergegangen wird, wobei die gestrichenen Größen ($x'$, $u'$) für den Objektraum und die ungestrichenen Größen ($x$, $u$) für den Bildraum stehen. Die zusätzliche dritte Dimension (mit "Eins-Eintrag") ermöglicht es in dem erweiterten Formalismus, Translationen und Verkippungen ebenfalls in Form von Transfermatrizen darzustellen.

Die Fourier-Abbildung ausgehend von der objektseitigen Brennebene der refraktiven Linse wird im erweiterten Formalismus durch die Transfermatrix

$$\underline{\underline{M}}(k) = \underbrace{\begin{pmatrix} 1 & f_0+z & 0 \\ 0 & 1 & 0 \\ 0 & 0 & 1 \end{pmatrix}}_{\substack{\text{Ausbreitung von Linse} \\ \textit{zu Schirm}}} \underbrace{\begin{pmatrix} 1 & 0 & -d_x \\ 0 & 1 & 0 \\ 0 & 0 & 1 \end{pmatrix} \begin{pmatrix} 1 & 0 & 0 \\ -\dfrac{k}{f_1} & 1 & 0 \\ 0 & 0 & 1 \end{pmatrix} \begin{pmatrix} 1 & 0 & d_x \\ 0 & 1 & 0 \\ 0 & 0 & 1 \end{pmatrix}}_{\text{dezentrierte diffraktive Linse}} \underbrace{\begin{pmatrix} 1 & 0 & 0 \\ -\dfrac{1}{f_0} & 1 & 0 \\ 0 & 0 & 1 \end{pmatrix}}_{\text{refraktive Linse}} \underbrace{\begin{pmatrix} 1 & f_0 & 0 \\ 0 & 1 & 0 \\ 0 & 0 & 1 \end{pmatrix}}_{\substack{\text{Ausbreitung von Fourier} \\ \text{Ebene zu Linse}}}$$

$$\underbrace{\phantom{XXXXXXXXXXXXXXXXXXXXXXXXXXXXXXXXXXXX}}_{\text{effektive Fokusaufspaltung multifokale Linse}}$$

$$= \begin{pmatrix} -z\left(\dfrac{1}{f_0}+\dfrac{k}{f_1}\right)-k\dfrac{f_0}{f_1} & f_0-\dfrac{f_0}{f_1}k(z+f_0) & -\dfrac{d_x}{f_1}k(z+f_0) \\[3mm] -\left(\dfrac{1}{f_0}+\dfrac{k}{f_1}\right) & -\dfrac{f_0}{f_1}k & -\dfrac{d_x}{f_1}k \\[3mm] 0 & 0 & 1 \end{pmatrix}$$

$$(19)$$

vermittelt. Aus den Matrixelementen lassen sich die folgenden gewünschten transversalen Strahlaufspaltungen infolge der Dezentrierung $d_x$ in einfacher Weise ablesen:

$$\frac{\partial u}{\partial d_x} = \frac{\partial}{\partial d_x}M_{23} = -\frac{k}{f_1} \tag{20}$$

$$\frac{\partial x}{\partial d_x} = \frac{\partial}{\partial d_x}M_{13} = -\frac{k}{f_1}(f_0+z) = \frac{\partial u}{\partial d_x}(f_0+z) \tag{21}$$

Diese beiden Gleichungen beschreiben die der Dezentrierung proportionale Strahlauffächerung eines kollimierten Strahls, wie sie in Fig. 3 (in welcher auch die longitudinale Fokusaufspaltung zu erkennen ist) veranschaulicht ist.

Die detaillierten quantitativen Abbildungseigenschaften eines kompletten afokalen Messstrahlengangs mit einer diffraktiven Multifokallinse mit innerer Dezentrierung, wie ihn Fig. 4b schematisch zeigt, erschließen sich aus der Transfermatrix des Gesamtsystems (von der objektseitigen kohärenten Punktquelle bis zur Sensoranordnung 250). Bezeichnet man wie in Fig. 4b mit $f'$ die Brennweite der objektseitigen Fourieroptik, mit $f_0$ die Brennweite des refraktiven optischen Elementes 242 und mit $f_1$ die Brennweite der diffraktiven Struktur 241, ergibt sich folgende Verkettung:

$$\underline{\underline{M}} = \underbrace{\begin{pmatrix} 1 & f_0+z & 0 \\ 0 & 1 & 0 \\ 0 & 0 & 1 \end{pmatrix}}_{\substack{\text{Ausbreitung von Linse} \\ \textit{zu Schirm}}} \underbrace{\begin{pmatrix} 1 & 0 & -d_x \\ 0 & 1 & 0 \\ 0 & 0 & 1 \end{pmatrix} \begin{pmatrix} 1 & 0 & 0 \\ \dfrac{-k}{f_1} & 1 & 0 \\ 0 & 0 & 1 \end{pmatrix} \begin{pmatrix} 1 & 0 & d_x \\ 0 & 1 & 0 \\ 0 & 0 & 1 \end{pmatrix}}_{\text{dezentrierte diffraktive Linse}} \underbrace{\begin{pmatrix} 1 & 0 & 0 \\ \dfrac{-1}{f_0} & 1 & 0 \\ 0 & 0 & 1 \end{pmatrix}}_{\text{refraktive Linse}} \times \cdots$$

$$\underbrace{\phantom{\text{effektive Aufspaltung multifokale Linse}}}_{\text{effektive Aufspaltung multifokale Linse}}$$

$$\cdots \times \underbrace{\begin{pmatrix} 1 & f_0 & 0 \\ 0 & 1 & 0 \\ 0 & 0 & 1 \end{pmatrix}}_{\substack{\text{Ausbreitung von} \\ \text{Fourier Ebene zu Linse}}} \underbrace{\begin{pmatrix} mag & 0 & 0 \\ 0 & \dfrac{1}{mag} & 0 \\ 0 & 0 & 1 \end{pmatrix} \begin{pmatrix} 1 & f' & 0 \\ 0 & 1 & 0 \\ 0 & 0 & 1 \end{pmatrix}}_{\text{Teleskop}} \underbrace{\begin{pmatrix} 1 & 0 & 0 \\ \dfrac{-1}{f'} & 1 & 0 \\ 0 & 0 & 1 \end{pmatrix} \begin{pmatrix} 1 & f'-z' & 0 \\ 0 & 1 & 0 \\ 0 & 0 & 1 \end{pmatrix}}_{\substack{\text{Objektiv Linse} \\ \text{(von Objekt zu Fourier Ebene)}}}$$

$$(22)$$

Die relevanten Transfer-Matrixelemente lauten nach der Ausmultiplikation:

$$M_{11} = \frac{\partial x}{\partial x'} = f_0 \frac{(f_0+z)k - f_1}{mag\; f_1 f'} \qquad (23a)$$

$$M_{12} = \frac{\partial x}{\partial u'} = \frac{1}{mag\; f_0 f_1 f'} \Big[ z' f_0^2 (f_1 - f_0 k) + \cdots$$
$$\cdots - z \big( mag^2 f'^2 (f_0 k + f_1) - f_0^2 z' k \big) - mag^2 f'^2 f_0^2 \Big] \qquad (23b)$$

$$M_{21} = \frac{\partial u}{\partial x'} = \frac{-1}{F} = \frac{f_0 k}{mag\; f_1 f'} \qquad (23c)$$

$$M_{22} = \frac{\partial u}{\partial u'} = -mag\; f' \left( \frac{1}{f_0} + \frac{k}{f_1} \right) - \frac{f_0 z' k}{mag\; f_1 f'} \qquad (23d)$$

$$\frac{M_{13}}{d_x} = \frac{\partial x}{\partial d_x} = -\frac{k}{f_1}(f_0 + z) \qquad (23e)$$

$$\frac{M_{23}}{d_x} = \frac{\partial u}{\partial d_x} = -\frac{k}{f_1} \qquad (23f)$$

Die bildseitigen longitudinalen Fokuslagen ergeben sich aus der Bedingung $M_{12} \overset{!}{=} 0$ zu

$$z_k(z_0) = \frac{-f_0^2 k + z_0(f_1 - f_0 k)}{f_1 + (f_0 + z_0)k} \qquad (24)$$

Darin steht $z_0 = Mag_0^2 z'$ für die Fokuslage des bildseitigen Hauptstrahls und $Mag_0 = \dfrac{f_0}{mag\, f'}$ für dessen Fernfeld-Abbildungsmaßstab. Im jeweiligen Fokus erhält man durch Einsetzen von Gleichung (24) in die Gleichungen (23a)-(23f) die strahlspezifischen Abbildungseigenschaften des Systems zu

$$M_{11}(k; z_k(z_0)) = -Mag_0 \frac{f_1}{f_1 + f_0 k + z_0 k} = -Mag_k(z_0) \qquad (25a)$$

$$M_{12}(k; z_k(z_0)) = 0 \qquad (25b)$$

$$M_{21}(k; z_k(z_0)) = \frac{-1}{F_k} = Mag_0 \frac{k}{f_1} \quad \Rightarrow \quad F_k = -\frac{f_1}{Mag_0\, k} \qquad (25c)$$

$$M_{22}(k; z_k(z_0)) = -\frac{1}{Mag_0} \frac{f_1 + (f_0 + z_0)k}{f_1} = \frac{1}{M_{11}(k; z_k(z_0))} \qquad (25d)$$

Der Größenabbildungsmaßstab$Mag_k(z_0)$ = $-M_{11}(k; z_k(z_0))$ ist identisch zum reziproken Winkelabbildungsmaßstab entsprechend $M_{22}(k; z_k(z_0))M_{11}(k; z_k(z_0))=1$ und hängt dabei sowohl vom Reflexindex als auch vom Defokus $z_0$ ab gemäß

$$Mag_k(z_0) = Mag_0 \frac{f_1}{f_1 + (f_0 + z_0)k} \qquad (26)$$

Das Nicht-Verschwinden des Terms $M_{21}(k; z_k(z_0))$ entspricht einer nichtverschwindenden Brechkraft (reziproke Brennweite $F_k$) für das Gesamtsystem und bedeutet eine strahlabhängige Telezentrie für die höheren Beugungsordnungen.

Setzt man die Beziehungen (25a)-(25d) in die den Fokusverlauf beschreibende Gleichung (5) ein und wählt man für die Position der Sensoranordnung 250 den Wert $z = 0$, so erhält man bei Berücksichtigung der Abbildungsmaßstäbe gemäß Gleichung (26)

$$w_k = w_k(z = 0) = \sqrt{w_{k,0}^2 + \theta_k^2 (-z_k(z_0))^2} \qquad (27)$$

wobei

$$w_{k,0} = \frac{Mag_k(z_0)}{Mag_0} w_0 \qquad (28)$$

und

$$\theta_k = \frac{Mag_0}{Mag_k(z_0)} \theta_0 \qquad (29)$$

die Taillengrößen und die Divergenzwinkel der Nutzstrahlen bezogen auf den Hauptstrahl bezeichnen und die Substitution $w_0 = w_{0,0}$ gilt. Durch Auflösen, Umstellung und Verwendung von Gleichung (26) ergibt sich daraus als Bestimmungsgleichung für die bildseitigen Fernfeldparameter $\theta_0$, $w_0$ und $z_0$

$$w_k^2 = w_0^2 \left( \frac{f_1}{f_1 + (f_0 + z_0)k} \right)^2 + \theta_0^2 \left( \frac{f_0^2 k - z_0 (f_1 - f_0 k)}{f_1} \right)^2 \qquad (30)$$

Die Strahlparameter sind daraus nicht mehr wie im Falle der Gleichungen (12) - (14) durch einfache Parabelanpassung bestimmbar. Ein mögliches Schema zur Bestimmung der Fernfeldparameter erhält man durch die Umschreibung von Gleichung (30) in Anlehnung an die Gleichungen (12)-(14) unter der Definition des Parameter $\leftrightarrow$ Mustersatzes

$$A_1 = w_0^2 \quad \leftrightarrow \quad m_1(k, z_0) = \left( \frac{f_1}{f_1 + (f_0 + z_0)k} \right)^2 \qquad (31a)$$

$$A_2 = \theta_0^2 z_0^2 \quad \leftrightarrow \quad m_2(k) = \left( \frac{f_1 - f_0 k}{f_1} \right)^2 \qquad (31b)$$

$$A_3 = -2\theta_0^2 z_0 \quad \leftrightarrow \quad m_3(k) = \frac{f_0^2 k}{f_1} \frac{(f_1 - f_0 k)}{f_1} \qquad (31c)$$

$$A_4 = \theta_0^2 \quad \leftrightarrow \quad m_4(k) = \left( \frac{f_0^2 k}{f_1} \right)^2 \qquad (31d)$$

in die Form

$$w_k^2 = A_1 m_1(k, z_0) + A_2 m_2(k) + A_3 m_3(k) + A_4 m_4(k) \qquad (32)$$

Durch lineare Anpassung der Muster $m_1(k,z_0), m_2(k), m_3(k)$ und $m_4(k)$ an die gemessenen Spotgrößen bekommt man die Parameter $A_1$ bis $A_4$, aus denen die sich die Fernfeldparameter in weitgehender Analogie zu Gleichung (14) über

$$\theta_0 = \sqrt{A_4} \quad , \quad z_0 = -\frac{A_3}{2A_4} \quad , \quad w_0 = \sqrt{A_1} \qquad (33)$$

bestimmen. Die Lösung der Gleichungen (32) gestaltet sich infolge der expliziten Abhängigkeit des Musters $m_1(k,z_0)$ von $z_0$ komplexer als bei den zuvor für herkömmliche Strahlauswertung erhaltenen Gleichungen (14). Dem kann gemäß einer Ausführungsform dadurch Rechnung getragen werden, dass eine iterative Vorgehensweise wie im Folgenden beschrieben gewählt wird. In einem ersten Iterationsschritt wird $m_1(k,z_0)$ durch $m_1\left(k, z_0^{(0)} = 0\right)$ ersetzt und durch die Anpassung gemäß Gleichung (28) und die Verrechnung gemäß der Gleichungen (32) eine erste Schätzung für $z_0^{(1)}$ gewonnen. Im nächsten Schritt wird dann das verbesserte Muster $m_1\left(k, z_0^{(1)} = 0\right)$ berechnet und die verbesserte Schätzung $z_0^{(2)}$ gewonnen. Das Verfahren wird solange fortgesetzt, bis ein an die Iteration gestelltes Abbruchkriterium erfüllt ist und die Parameter sich von Iteration zu Iteration im Rahmen der zulässigen Grenzen nicht mehr ändern.

Im Weiteren wird auf mögliche Auslegungen der in der erfindungsgemäßen strahlaufspaltenden optischen Anordnung 240 vorhandene diffraktive Struktur 241 eingegangen.

Grundsätzlich kann die Auslegung der strahlaufspaltenden optischen Anordnung 240 in zwei Schritten erfolgen, wobei in einem ersten Schritt die Basisparameter (Brennweite $f_0$ des refraktiven optischen Elementes 242, Brennweite

$f_1$ der diffraktiven Struktur 241 und Dezentrierung $d_x$) festgelegt werden und in einem zweiten Schritt das konkrete Stufenprofil der diffraktiven Struktur 241 unter Optimierung der Beugungseffizienzen für die einzelnen Teilstrahlen bzw. Beugungsordnungen vorgegeben wird.

Für den longitudinalen Fokusversatz zwischen den Randstrahlen mit den Indizes $k = \pm k_{max}$ und dem Hauptstrahl folgt aus Gleichung (23)

$$\left| z_{k_{max}}(0) - z_0(0) \right| = \frac{f_0^2 k_{max}}{f_1 \pm f_0 k_{max}} \overset{!}{=} \kappa_1 DoF \qquad (34)$$

wobei der Tiefenschärfebereich des Fernfeldes $DoF$ zu einem Anteil $\kappa_1$ (typischer Wert $\kappa_1 = 1$) abgedeckt werden soll. Die laterale Aufspaltung zwischen den Randstrahlen und dem Hauptstrahl lautet

$$\left| \overline{x}_{k_{max}} - \overline{x}_0 \right| = \frac{f_0}{f_1} k_{max} d_x \overset{!}{=} \kappa_2 \frac{L_{sensor}}{2} \qquad (35)$$

und soll die halbe gegebene Sensorlänge $L_{sensor}$ zu einem Anteil $\kappa_2$ (typischer Wert $\kappa_2 = 3/4$) umfassen. Der Tiefenschärfebereich ist für hart begrenzte (z.B. Tophat-) Strahlen definiert als $\lambda/NA^2$ und für Gaußstrahlen als $M^2 \cdot \lambda/\pi \, \theta^2$.

Aus den Beziehungen (34) und (35) ergeben sich unmittelbar folgende Auslegungsregeln für die Brennweite $f_1$ der diffraktiven Struktur 241:

$$f_1 = \frac{k_{max} f_0}{\kappa_1 DoF} \left( f_0 \mp DoF \right) \underset{f_0 \gg DoF}{\approx} \frac{k_{max} f_0^2}{\kappa_1 DoF} \qquad (36)$$

sowie für deren Dezentrierung $d_x$:

$$d_x = \frac{\kappa_2}{2} \frac{L_{sensor}}{k_{max}} \frac{f_1}{f_0} \qquad (37)$$

Mit Festlegung der beiden Parameter $f_1$ und $d_x$ lautet die Phasenfunktion $\Phi(x,y)$, die durch die diffraktive Struktur 241 in der ersten Beugungsordnung realisiert werden soll:

$$\Phi(x,y) = \frac{2\pi}{\lambda} \left[ \sqrt{(x-d_x)^2 + y^2 + f_1^2} - f_1 \right] \qquad (38)$$

Diese Funktion ergibt sich aus der Phasendifferenz einer vom Ort $(d_x, 0, f_1)$ ausgehenden Kugelwelle und einer Planwelle mit Ausbreitungsvektor parallel zur z-Achse betrachtet an der Position $z = 0$, wobei die Wellenlänge mit $\lambda$ bezeichnet ist.

Eine geeignete Approximation dieser Phasenfunktion kann durch folgende zwei Operationen erfolgen: Zunächst wird die Phase auf den Eindeutigkeitsbereich $[0, 2\pi]$ durch die Modulo-Operation gebracht, entsprechend

$$\Phi_{mod}(x,y) = \mathrm{mod}\left( \frac{2\pi}{\lambda} \left[ \sqrt{(x-d_x)^2 + y^2 + f_1^2} - f_1 \right], 2\pi \right) \qquad (39)$$

Im Anschluss wird auf diesem Grundbereich die so bereinigte Phase durch eine Abbildung $U(w)$ mit Definitionsbereich $0 \leq w \leq 1$ geeignet tranformiert, entsprechend

$$\Phi_{DOE}(x,y) = U\left( \frac{\Phi_{mod}(x,y)}{2\pi} \right) \qquad (40)$$

Die Funktion $U(w)$ beschreibt die komplexe Transmissionsfunktion über die auf die Länge Eins normierte Einheitszelle eines regulären periodischen Gitters. Die Beugungseffizienzen $\eta_k = |c_k|^2$ für die Beugungsordnungen eines solchen Gitters, die durch den Index $k = 0, \pm 1, \pm 2,...$ gekennzeichnet sind, sind durch die Fourier-Koeffizienten

$$c_k = \int_0^1 dx \exp(-2\pi i k x) U(x) \qquad (41)$$

bestimmt.

Eine weitere Designaufgabe besteht in der Anpassung der Beugungseffizienzen an die Messanwendung durch geeignete Wahl der komplexen Transmissionsfunktion $U(w)$. Zur Vermeidung von Lichtverlusten wird ohne Beschränkung der Allgemeinheit im Weiteren ein reines Phasenelement mit $U(w) = \exp(i\phi(w))$ betrachtet, welche fertigungstechnisch dadurch realisiert werden kann, dass in die Oberfläche eines Glaskörpers z.B. durch Ätzen ein Dickenprofil $t(x,y)$ eingebracht wird. Die Korrespondenz zwischen Dickenfunktion und Phase lautet dabei

$$t(w) = \frac{\phi(w)}{2\pi} \frac{\lambda}{n_g - 1} \qquad (42)$$

wobei $n_g$ für den Brechungsindex des Substratmaterials steht.

Die in der erfindungsgemäßen strahlaufspaltenden optischen Anordnung 240 vorhandene diffraktive Struktur 241 kann als (z.B. binäres) Phasen-DOE realisiert werden. Die am einfachsten zu fertigende Klasse binärer Phasen-DOE (mit zwei unterschiedlichen Phasenwerten) weist pro Elementarzelle lediglich eine Stufe auf. Als Designfreiheitsgrade stehen lediglich der Phasenhub $\Delta\phi$ und die Stufenposition (angegeben durch das Tastverhältnis $dc = w_{step}$) zur Verfügung. Mit der nächsthöheren Klasse binärer DOE mit zwei Plateaus pro Einheitszelle und den vier Designfreiheitsgraden Phasenhub $\Delta\phi$, Plateaubreiten $b_1$ und $b_2$ sowie Abstand $d_{12}$ zwischen den beiden Plateaus ist es möglich, bis einschließlich der dritten Ordnung einen optimierten Verlauf der Beugungsordnungen einzustellen. Die Phase der an dem Phasen-DOE gebeugten elektromagnetischen Strahlung korrespondiert mit der Stufenhöhe der Ätzstufen.

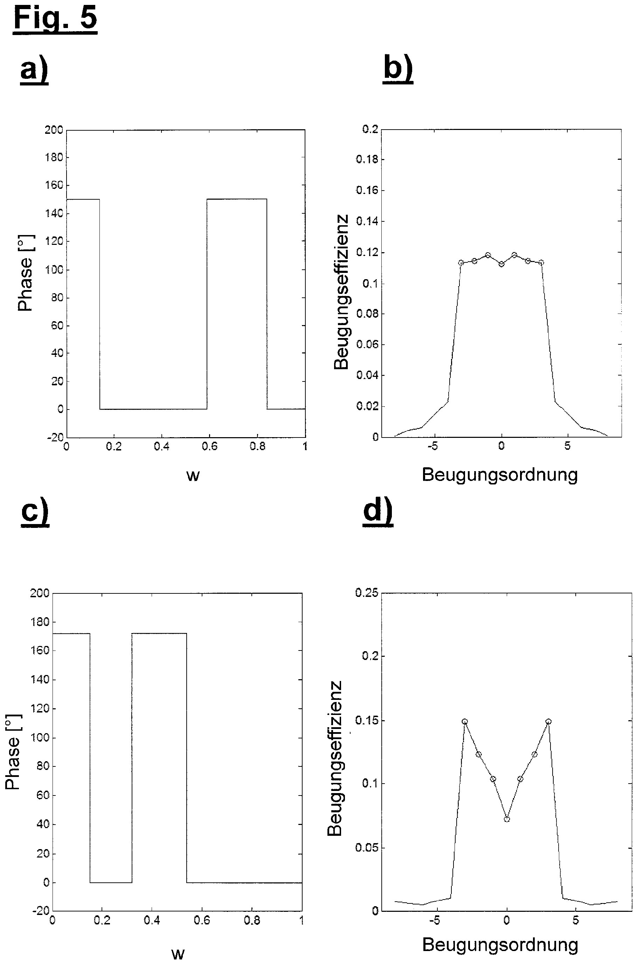

In Fig. 5a-d sind Phasenprofile und die korrespondierenden Beugungseffizienzen für zwei unterschiedliche Optimierungsziele dargestellt:

In Fig. 5a,b wurde auf Ausgewogenheit (möglichst Gleichheit) der Nutzbeugungsordnungen - $3 \le k_{max} \le +3$ optimiert, wobei Fig. 5a eine Elementarzelle des Gitters zeigt. In dem hier dargestellten Phasen-DOE wird, wie in Fig. 5b dargestellt, für die Nutzbeugungsordnungen jeweils eine Beugungseffizienz im Bereich von 0.11-0.12 erzielt, wohingegen die übrigen (nicht genutzten) Beugungsordnungen) mit wenig Energie belegt werden. Diese Ausgestaltung hat im konkreten Ausführungsbeispiel zur Folge, dass bei Nutzung von insgesamt sieben Teilstrahlen bzw. Nutzbeugungsordnungen (umfassend die (-3)-te bis (+3)-te Beugungsordnung) etwa 80% der eingestrahlten Energie in diesen Nutzbeugungsordnungen liegt und für die Messung genutzt werden kann. Die erfindungsgemäße strahlaufspaltende optische Anordnung 240 ermöglicht es somit insbesondere, mit einem vergleichsweise einfachen DOE-Grunddesign (nämlich einem binären bzw. zweistufigen Phasen-DOE) Beugungseffizienzen zu generieren, die eine weitgehend gleichmäßige Verteilung der Energie über die genutzten Beugungsordnungen mit hoher Effizienz ermöglichen, so dass diese Ausgestaltung insbesondere bei lichtschwachen Verhältnissen vorteilhaft ist.

In weiteren Ausführungsformen kann, wie in Fig. 5c,d dargestellt, von der vorstehend beschriebenen gleichmäßigen Verteilung der Energie über die genutzten Beugungsordnungen auch gezielt abgewichen werden, wobei etwa gemäß Fig. 5d (durch entsprechendes Gitterdesign gemäß Fig. 5c) ein im Wesentlichen V-artiger Verlauf der Beugungseffizienzen realisiert werden kann, bei welchem die höheren Beugungsordnungen mit mehr Energie versehen werden. Hierdurch kann dem Umstand Rechnung getragen werden, dass die auf der Sensoranordnung 250 erzeugten Spots nach außen bzw. mit zunehmendem Abstand von der optimalen Fokuslage breiter werden, die entsprechenden Bereiche also dunkler werden. Durch einen Verlauf der Beugungseffizienzen wie in Fig. 5d gezeigt kann dieser Effekt der mit zunehmender Defokussierung der durch Aufspaltung der zu analysierenden elektromagnetischen Strahlung erzeugten Teilstrahlen auf der Sensoranordnung einhergehenden Intensitätsabnahme wenigstens teilweise kompensiert werden, wodurch der Nutzbereich der Sensoranordnung vergrößert werden kann. In Fig. 5c,d wurde somit auf einen möglichst linearen Anstieg der Beugungseffizienzen mit dem Betrag der Beugungsordnung hin optimiert, um den Intensitätsabfall aufgrund der Strahlverbreiterung außerhalb des Fokus zumindest teilweise zu kompensieren.

In weiteren Ausführungsformen kann die erfindungsgemäße diffraktive Struktur auch anstelle eines Phasen-DOE durch ein Transmissions-DOE bzw. (absorbierendes) Graustufen-DOE oder durch beliebige andere DOE-Systeme realisiert werden, z.B. Mehrstufen-DOE's etc.

Eine Beschränkung des erfindungsgemäßen Konzepts der Verwendung einer diffraktiven Struktur zur Realisierung einer multifokalen strahlaufspaltenden optischen Anordnung bzw. Strahlpropagationskamera ist letztendlich durch die Begrenzung des minimal erreichbaren Streifenabstandes bei der DOE-Herstellung gegeben. Der kleinstmögliche Streifenabstand, hier als kritische Dimension *cd* bezeichnet, liegt für das ausgeführte DOE-Design mit zwei Plateaus von gleicher Höhe bei

$$cd = \Delta r_{min} \, min(b_1, b_2, d_{12}, 1 - b_1 - b_2 - d_{12}) \approx 0.1 \, \Delta r_{min} \qquad (43)$$

Darin bezeichnet

$$\Delta r_{min} \approx \frac{f_1 \lambda}{2 \, r_{max}} = \frac{f_1 \lambda}{2 \left( d_x + D_{aperture} \right)} \qquad (44)$$

den kleinsten Ringabstand einer Zonenplatte mit Brennweite $f_1$ beim maximalen Nutzradius der Zonenplatte. Letzterer ist durch $r_{max} = d_x + D_{aperture}$ gegeben, wobei $D_{aperture}$ den Durchmesser der Öffnungsapertur und $d_x$ die gewünschte Dezentrierung bezeichnet.

**Patentansprüche**

1. Strahlpropagationskamera zur Vermessung der Fernfeldeigenschaften bzw. Fokussiereigenschaften sowie der Fokusposition eines Lichtstrahls, mit:

   • wenigstens einer strahlaufspaltenden optischen Anordnung (240), welche eine Strahlaufspaltung eines im Betrieb der Strahlpropagationskamera auf die strahlaufspaltende optische Anordnung (240) entlang einer optischen Achse (OA) der Strahlpropagationskamera auftreffenden Strahls in sieben Teilstrahlen umfassend die -3te bis +3te Beugungsordnung bewirkt; und
   • einer Sensoranordnung (250) zur Erfassung dieser Teilstrahlen und zur Messung der von diesen Teilstrahlen auf der Sensoranordnung (250) jeweils erzeugten Spotgrößen;
   • wobei die strahlaufspaltende optische Anordnung (240) eine diffraktive Struktur (241) und ein refraktives optisches Element (242) aufweist, wobei die diffraktive Struktur (241) in Bezug auf die optische Achse (OA) dezentriert angeordnet ist;
   • wobei die diffraktive Struktur (241) derart ausgestaltet ist, dass wenigstens zwei der Teilstrahlen auf der Sensoranordnung (250) räumlich voneinander getrennt sind und einen Fokusversatz in bezogen auf die optische Achse (OA) longitudinaler Richtung aufweisen; und
   • wobei die diffraktive Struktur (241) eine Brennweite $f_1$ aufweist, welche die Brennweite der ersten positiven Beugungsordnung bezeichnet, und das refraktive optische Element (242) eine Brennweite $f_0$ aufweist, wobei das Verhältnis $f_1/f_0$ wenigstens 4 beträgt.

2. Strahlpropagationskamera nach Anspruch 1, **dadurch gekennzeichnet, dass** das Verhältnis $f_1/f_0$ wenigstens 10 beträgt.

3. Strahlpropagationskamera nach Anspruch 1 oder 2, **dadurch gekennzeichnet, dass** das refraktive optische Element (242) und die diffraktive Struktur (241) monolithisch ausgestaltet sind.

4. Strahlpropagationskamera nach einem der Ansprüche 1 bis 3, **dadurch gekennzeichnet, dass** das refraktive optische Element eine Plankonvexlinse ist.

5. Strahlpropagationskamera nach einem der Ansprüche 1 bis 4, **dadurch gekennzeichnet, dass** die diffraktive Struktur (241) als Phasen-DOE ausgestaltet ist.

6. Strahlpropagationskamera nach einem der Ansprüche 1 bis 4, **dadurch gekennzeichnet, dass** die diffraktive Struktur (241) als Transmissions-DOE ausgestaltet ist.

7. Strahlpropagationskamera nach einem der vorhergehenden Ansprüche, **dadurch gekennzeichnet, dass** die diffraktive Struktur (241) als Fresnel-Linse oder Fresnel'sche Zonenplatte ausgestaltet ist.

8. Strahlpropagationskamera nach einem der vorhergehenden Ansprüche, **dadurch gekennzeichnet, dass** die diffraktive Struktur (241) in Transmission betrieben ist.

9. Strahlpropagationskamera nach einem der vorhergehenden Ansprüche, **dadurch gekennzeichnet, dass** die diffraktive Struktur (241) in Reflexion betrieben ist.

10. Verfahren zur Lichtstrahlanalyse zur Vermessung der Fernfeldeigenschaften bzw. Fokussiereigenschaften sowie der Fokusposition eines Lichtstrahls, wobei das Verfahren folgende Schritte aufweist:

 • Strahlaufspaltung eines sich entlang einer optischen Achse (OA) ausbreitenden Strahls in sieben Teilstrahlen umfassend die -3te bis +3te Beugungsordnung;
 • Messung der von diesen Teilstrahlen auf einer Sensoranordnung (250) jeweils erzeugten Spotgröße; und
 • Berechnung wenigstens eines der Strahlparameter Divergenz ($\theta$), Fokuslage ($z_0$) und Taillengröße ($w_0$) aus den gemessenen Spotgrößen;
 • wobei die Strahlaufspaltung unter Verwendung einer strahlaufspaltenden optischen Anordnung (240) derart erfolgt, dass wenigstens zwei der Teilstrahlen auf der Sensoranordnung (250) räumlich voneinander getrennt sind und einen Fokusversatz in bezogen auf die optische Achse (OA) longitudinaler Richtung aufweisen;
 • wobei die strahlaufspaltende optische Anordnung (240) eine diffraktive Struktur (241) und ein refraktives optisches Element (242) aufweist, wobei die diffraktive Struktur (241) in Bezug auf die optische Achse (OA) dezentriert angeordnet ist; und
 • wobei die diffraktive Struktur (241) eine Brennweite $f_1$ aufweist, welche die Brennweite der ersten positiven Beugungsordnung bezeichnet, und das refraktive optische Element (242) eine Brennweite $f_0$ aufweist, wobei das Verhältnis $f_1/f_0$ wenigstens 4 beträgt.

11. Verfahren nach Anspruch 10, **dadurch gekennzeichnet, dass** dieses unter Verwendung einer Strahlpropagationskamera nach einem der Ansprüche 1 bis 9 durchgeführt wird.

**Claims**

1. Beam propagation camera for measuring the far-field properties or focusing properties and the focus position of a light beam, comprising:

 - at least one beam-splitting optical arrangement (240) effecting beam splitting of a beam that is incident on the beam-splitting optical arrangement (240) along an optical axis (OA) of the beam propagation camera during the operation of the beam propagation camera into seven partial beams comprising the -3 to +3 order of diffraction; and
 - a sensor arrangement (250) for capturing said partial beams and for measuring the spot sizes produced in each case by said partial beams on the sensor arrangement (250) ;
 - wherein the beam-splitting optical arrangement (240) has a diffractive structure (241) and a refractive optical element (242), wherein the diffractive structure (241) is arranged in a decentred manner with respect to the optical axis (OA);
 - wherein the diffractive structure (241) is designed such that at least two of the partial beams are spatially separated from one another on the sensor arrangement (250) and have a focus offset in the longitudinal direction with respect to the optical axis (OA), and
 - wherein the diffractive structure (241) has a focal length $f_1$, which denotes the focal length of the first positive order of diffraction, and the refractive optical element (242) has a focal length $f_0$, with the ratio $f_1/f_0$ being at least 4.

2. Beam propagation camera according to Claim 1, **characterized in that** the ratio $f_1/f_0$ is at least 10.

3. Beam propagation camera according to Claim 1 or 2, **characterized in that** the refractive optical element (242) and the diffractive structure (241) have a monolithic design.

4. Beam propagation camera according to one of Claims 1 to 3, **characterized in that** the refractive optical element is a plano-convex lens.

5. Beam propagation camera according to one of Claims 1 to 4, **characterized in that** the diffractive structure (241) is designed as a phase DOE.

**6.** Beam propagation camera according to one of Claims 1 to 4, **characterized in that** the diffractive structure (241) is designed as a transmission DOE.

**7.** Beam propagation camera according to one of the preceding claims, **characterized in that** the diffractive structure (241) is designed as a Fresnel lens or Fresnel zone plate.

**8.** Beam propagation camera according to one of the preceding claims, **characterized in that** the diffractive structure (241) is operated in transmission.

**9.** Beam propagation camera according to one of the preceding claims, **characterized in that** the diffractive structure (241) is operated in reflection.

**10.** Method for light beam analysis for measuring far-field properties or focusing properties and the focus position of a light beam, wherein the method has the following steps:

- beam splitting of a beam propagating along an optical axis (OA) into seven partial beams comprising the -3 to +3 order of diffraction;
- measuring the spot size produced in each case by said partial beams on a sensor arrangement (250); and
- calculating at least one of the beam parameters divergence ($\theta$), focal position ($z_0$) and waist size ($w_0$) from the measured spot sizes;
- wherein the beam-splitting takes place using a beam-splitting optical arrangement (240) such that at least two of the partial beams are spatially separated from one another on the sensor arrangement (250) and have a focus offset in the longitudinal direction with respect to the optical axis (OA);
- wherein the beam-splitting optical arrangement (240) has a diffractive structure (241) and a refractive optical element (242), wherein the diffractive structure (241) is arranged in a decentred manner with respect to the optical axis (OA); and
- wherein the diffractive structure (241) has a focal length $f_1$, which denotes the focal length of the first positive order of diffraction, and the refractive optical element (242) has a focal length $f_0$, with the ratio $f_1/f_0$ being at least 4.

**11.** Method according to Claim 10, **characterized in that** it is performed using a beam propagation camera according to one of Claims 1 to 9.

**Revendications**

**1.** Caméra à propagation de faisceau servant à mesurer les propriétés du champ lointain ou les propriétés de focalisation et la position du foyer d'un faisceau lumineux, comportant :

• au moins un système optique de division de faisceau (240) qui effectue, lors du fonctionnement de la caméra à propagation de faisceau, une division de faisceau d'un faisceau incident sur le système optique de division de faisceau (240) le long d'un axe optique (OA) de la caméra à propagation de faisceau en sept faisceaux partiels comprenant les -3ème à +3ème ordres de diffraction ; et
• un système de capteurs (250) servant à détecter lesdits faisceaux partiels et à mesurer les tailles de points respectivement générées par lesdits faisceaux partiels sur le système de capteurs (250) ;
• dans laquelle le système optique de division de faisceau (240) comprend une structure diffractive (241) et un élément optique réfractif (242), dans laquelle la structure diffractive (241) est disposée de manière décentrée par rapport à l'axe optique (OA) ;
• dans laquelle la structure diffractive (241) est configurée de telle sorte qu'au moins deux des faisceaux partiels incidents sur le système de capteurs (250) soient séparés spatialement l'un de l'autre et présentent un décalage de foyer dans la direction longitudinale par rapport à l'axe optique (OA) ; et
• dans laquelle la structure diffractive (241) présente une longueur focale $f_1$, qui représente la longueur focale du premier ordre de diffraction positif, et l'élément optique réfractif (242) présente une longueur focale $f_0$, dans laquelle le rapport $f_1/f_0$ est au moins égal à 4.

**2.** Caméra à propagation de faisceau selon la revendication 1, **caractérisée en ce que** le rapport $f_1/f_0$ est au moins égal à 10.

3. Caméra à propagation de faisceau selon la revendication 1 ou 2, **caractérisée en ce que** l'élément optique réfractif (242) et la structure diffractive (241) sont configurées de manière monolithique.

4. Caméra à propagation de faisceau selon l'une des revendications 1 à 3, **caractérisée en ce que** l'élément optique réfractif est une lentille plan-convexe.

5. Caméra à propagation de faisceau selon l'une des revendications 1 à 4, **caractérisée en ce que** la structure diffractive (241) est réalisée sous la forme d'un EOD de phase.

6. Caméra à propagation de faisceau selon l'une des revendications 1 à 4, **caractérisée en ce que** la structure diffractive (241) est réalisée sous la forme d'un EOD de transmission.

7. Caméra à propagation de faisceau selon l'une des revendications précédentes, **caractérisée en ce que** la structure diffractive (241) est réalisée sous la forme d'une lentille de Fresnel ou d'une lame zonée de Fresnel.

8. Caméra à propagation de faisceau selon l'une des revendications précédentes, **caractérisée en ce que** la structure diffractive (241) est exploitée en transmission.

9. Caméra à propagation de faisceau selon l'une des revendications précédentes, **caractérisée en ce que** la structure diffractive (241) est exploitée en réflexion.

10. Procédé d'analyse d'un faisceau lumineux pour mesurer les propriétés du champ lointain ou les propriétés de focalisation et la position du foyer d'un faisceau lumineux,
le procédé comprenant les étapes suivantes :

   • division de faisceau d'un faisceau se propageant le long d'un axe optique (OA) en sept faisceaux partiels comprenant les -3ème à +3ème ordres de diffraction ;
   • mesure de la taille de point respectivement générée par lesdits faisceaux partiels sur un système de capteurs (250) ; et
   • calcul d'au moins l'un des paramètres de faisceau que sont la divergence ($\theta$), la position du foyer ($z_0$) et la taille de faisceau ($w_0$) à partir des tailles de points mesurées ;
   • dans lequel la division de faisceau est effectuée à l'aide d'un système optique de division de faisceau (240) de telle sorte qu'au moins deux des faisceaux partiels incidents sur le système de capteurs (250) soient séparés spatialement l'un de l'autre et présentent un décalage de foyer dans la direction longitudinale par rapport à l'axe optique (OA) ;
   • dans lequel le système optique de division de faisceau (240) comprend une structure diffractive (241) et un élément optique réfractif (242), dans lequel la structure diffractive (241) est décentrée par rapport à l'axe optique (OA) ; et
   • dans lequel la structure diffractive (241) présente une longueur focale $f_1$, qui représente la longueur focale du premier ordre de diffraction positif, et l'élément optique réfractif (242) présente une longueur focale $f_0$, dans lequel le rapport $f_1/f_0$ est au moins égal à 4.

11. Procédé selon la revendication 10, **caractérisé en ce qu'**il est mis en œuvre à l'aide d'une caméra à propagation de faisceau selon l'une des revendications 1 à 9.

EP 3 100 011 B1

## Fig. 1

## Fig. 2a

$$f_r = f_0$$

$$f_d = \frac{f_1}{k}, \quad k = 0, \pm1, \pm2, \ldots$$

242  241  240

## Fig. 2b

$f_0 = 200$ , $f_1 = 2000$

komb. Brennweite

Beugungsordnung

## Fig. 2c

EP 3 100 011 B1

# Fig. 3

Teleskopausgangslinse    PP

Pupillenebene
(Fourier)

Fokusaufspaltung
multifokale
Linse

Sensor **IFC**
Ebene

SP

240

OA

Isofokallinie

$k = -3$

$k = -2$

$k = -1$

$k = 0$

$k = +1$

$k = +2$

$k = +3$

EP 3 100 011 B1

## Fig. 4a

EP 3 100 011 B1

**Fig. 4b**

EP 3 100 011 B1

# Fig. 5

## a)

## b)

## c)

## d)

# Fig. 6

## Stand der Technik

735

740

710

711

706

732

741

730    720

IF

y

z

27

EP 3 100 011 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014201779
- US 20090185132 A1
- US 2006268669 A1
- US 8237922 B2
- US 5329350 A